# EUROPEAN PATENT SPECIFICATION

(11) **EP 2 895 250 B1**
(45) Date of publication and mention of the grant of the patent: **28.04.2021**
(21) Application number: 12795010.3
(22) Date of filing: 05.12.2012
(51) Int. Cl.: B01D 46/00, B01D 46/12, B01D 46/52

(54) **BACKING NET STRUCTURE**
UNTERSTÜTZENDE NETZSTRUKTUR
STRUCTURE DE FILET DE SUPPORT

(30) Priority: 12.09.2012 WO PCT/EP2012/067746; 21.09.2012 WO PCT/EP2012/068707
(43) Date of publication of application: 22.07.2015
(73) Proprietor: Camfil AB, 111 34 Stockholm (SE)
(72) Inventor: HEDLUND, Kenny, S-619 33 Trosa (SE)
(74) Representative: BRP Renaud & Partner mbB Rechtsanwälte Patentanwälte Steuerberater
(86) International application number: PCT/EP2012/074546
(87) International publication number: WO 2014/040658

(56) References cited:
- WO-A1-2008/001396
- DE-A1-102010 016 504
- DE-U1- 20 002 124
- US-A- 3 999 964
- US-A1- 2003 145 568
- US-A1- 2012 067 013

## Description

### FIELD OF THE INVENTION

The present invention relates to filter assemblies for removing particles from an air flow, and more particularly to a backing net structure for a media pack, in particular for a media pack comprising a pleated filter media in a V-type arrangement.

### BACKGROUND OF THE INVENTION

Filter assemblies comprising pleated media packs disposed in a frame structure are known. A pleated filter pack is typically formed from a sheet of filter media, e.g. a fiberglass sheet, or a nonwoven polyester sheet, which is pleated to increase the effective filtering area of the filter body. To provide mechanical support and/or to combine a plurality of media packs, the media pack is typically arranged in a frame structure, such as a frame having a V-type arrangement. In order to enhance the physical properties of pleated filter media, it is known to provide different types of support elements thereto such that deflection during use of the filter media can be reduced. Deflection can in a worst case scenario lead to a break of the filter media. But even if it does not come to a breakage of the filter media, deflection thereof causes adjacent media packs to come closer to each other or even come in contact. Both events lead to an increase in pressure drop over the filter since the air cannot flow as intended through there. One example of support is shown in WO-2010/151542 where a flexible but inextensible scrim is attached to a downstream surface of a filter media. While the use of such scrim has advantages over the use of a filter media with no backing at all and prevents deformation of the filter media to a certain extent, it still has some disadvantages. For example, since the scrim is attached to the pleats of the filter media itself, the forces acting on the scrim will be transferred to these pleats which, if it comes to the worst case, may burst thus ruining the filter media

Some further examples of known backing supports are found in US 3 999 964 A, US 2012/067013 A1 and US 2003/145568 A1.

### SUMMARY OF THE INVENTION

It is an object of the present invention to provide an improved backing net which reduces or eliminates the above mentioned and other drawbacks. This object and other objects are achieved by a backing net according to the present invention as defined in claim 1 of the appended claims. This object and other objects are also achieved by a media pack as defined in claim 8 and a V-type filter as defined in claim 9 of the appended claims. Preferred embodiments of the present invention are defined in the dependent claims.

Thus, in accordance with an aspect of the present invention there is provided a backing net for a media pack, where the backing net has a longitudinal direction arranged to extend along an in depth length of the media pack, i.e. in the direction of the air flow, and a lateral direction, i.e. a direction substantially perpendicular to the longitudinal direction, arranged to extend along a width of the media pack. The backing net comprises a plurality of longitudinal beams each having first and second ends and being arranged to be mounted to the media pack in the longitudinal direction, and each having a height that varies over their length with a reduced height at the ends of the longitudinal beam. The backing net further comprises a plurality of vanes, wherein each vane is attached to adjacent longitudinal beams and is arranged in a gap between the adjacent longitudinal beams to extend in the lateral direction, and wherein the vanes are adapted to direct an air flow passing through the backing net in a preferred direction. An angle ϕ between the normal of the principal plane of the backing net and a straight, imaginary line connecting the starting point and the end point of each vane lies between 0° and 90°. The provision of a vane does not only increase rigidity of the system, it also provides a better guidance of the air flow passing through the filter and the backing net in comparison with prior art solutions. This increases the air flow properties of a filter. Further, by using a backing net according to the invention deflection of the media pack is reduced due to the added rigidity of the backing net in comparison with prior art solutions. This allows for the use of filter media packs having a greater in-depth length, that is the length of the media pack in the direction of the air flow, which reduces pressure drop over the filter at a given flow rate. Further, this rigidity allows the use of media packs having a reduced thickness. This reduces the amount of dead area, i.e. areas where the air flow cannot pass through. All in all, by using a backing net according to the present invention, filter arrangements can be obtained with improved filtering characteristics, reduced pressure drop and increased life time expectancy.

In accordance with an embodiment of the invention, the vane is provided in form of vane elements arranged in gaps between adjacent longitudinal beams.

In accordance with an embodiment of the invention, a plurality of laterally extending vanes are provided.

In accordance with an embodiment of the invention, the dimensions of the separate vanes differ. By using vanes having different sizes at different locations of the backing net, the properties can be optimized. For example, vanes near a central part of the backing net may have larger dimensions than vanes located near a downstream edge. Near an up-stream edge of the backing net, a vane having relatively large dimensions may nevertheless be used in order to function as a touch guard, i.e. provide protection for the filter media pack against intrusion of e.g. a user's hands or fingers. This is advantageous since it often happens that a user, when e.g. assembling a filter frame assembly or mounting a filter frame assembly to a filter bank grid or similar, accidently pushes her or his fingers through the filter media pack, possibly spoiling it. A vane having a relatively large chord length avoids this and in addition it also guides an air flow in a suitable direction.

In accordance with an embodiment of the invention, the vane has a flat shape. A vane near an up-stream edge of the backing net may for example have a flat shape, acting both as air flow guidance and as a touch guard.

In accordance with an embodiment of the invention, the vane has a curved shape. An air flow entering a V-type filter frame assembly comprising a pleated filter media will pass through the filter media itself at a direction more or less perpendicular to the main surface of the filter media pack. As the air then exits the filter media pack, it changes its flow direction into the overall flow direction. A curved vane can be made with an up-stream starting point, i.e. closest to the filter media pack, having a relatively steep angle, i.e. perpendicular to the filter media pack, or at least close thereto. Immediately thereafter, the curvature of the vane can turn towards the preferred flow direction. The curvature secures that the air flow can be re-directed without unnecessary pressure drop.

In accordance with an embodiment of the invention, no point of the vane has a greater height than the height of the beam at the same in depth position. By avoiding that the vanes add to the overall height of the backing net in addition to the longitudinal beams, the combined thickness of filter media pack and backing net can be reduced, thereby reducing overall dimensions.

In accordance with an embodiment of the invention, the vane has a curved shape such that the angle between the normal to a principal plane of the backing net and a straight, imaginary line between the vane starting point and any point on the vane is smaller or equal to the angle between the normal of the principal plane of the backing net and a straight, imaginary line connecting the starting point and the end point of the vane. The starting point being the up-stream end point of the vane and the end point being the down-stream end point of the vane.

In accordance with an embodiment of the invention, at least a partial surface of the vane has a surface roughness which delays flow separation of an air flow passing through the backing net. Flow separation of the air flow is highly undesirable since it significantly increases pressure drop. By providing at least parts of the vane with a surface roughness adapted to induce a turbulent flow in the boundary layer, the risk of flow separation can be greatly reduced. This since turbulent flow is much less prone to separation in comparison with a laminar flow. This can be achieved by the provision of dimples (cf. golf balls) over the surface of the upper part, i.e. down-stream surface, of the vane. Of course, other parts of the backing net, such as the longitudinal beams could also be provided with such surface roughness. Instead of depressions, such as dimples, protrusions are also conceivable.

In accordance with another aspect of the invention, a media pack for a V-type filter is provided, where the media pack has an up-stream surface and a down-stream surface and wherein a backing net as defined above is provided on the down-stream surface of the media pack.

In accordance with another aspect of the invention, a V-type filter comprising a plurality of said media packs arranged in a V-type manner is provided, where the V-type filter comprises a frame structure and wherein the media pack is attached to said frame structure.

In accordance with an embodiment of the invention, an angle ϕ between the normal of the principal plane of the backing net and a straight, imaginary line connecting the starting point and the end point of the vane is α<ϕ<90°, where α is half the opening angle of the V-shape.

In accordance with an embodiment of the invention, an angle ϕ between the normal of the principal plane of the backing net and a straight, imaginary line connecting the starting point and the end point of the vane is 2*α<ϕ<90°, where α is half the opening angle of the V-shape and α<45°.

In accordance with an embodiment of the invention, an angle ϕ between the normal of the principal plane of the backing net and a straight, imaginary line connecting the starting point and the end point of the vane is 3*α<ϕ<90°, where α is half the opening angle of the V-shape and α<30°.

In accordance with an embodiment of the invention, an angle ϕ between the normal of the principal plane of the backing net and a straight, imaginary line connecting the starting point and the end point of the vane is α<ϕ<90°- α, where α is half the opening angle of the V-shape and where α<45°.

In accordance with an embodiment of the invention, the dimensions and shapes of the backing net are chosen such that the backing net does not form a restriction of the air flow through the filter in addition to the filter media.

### BRIEF DESCRIPTION OF THE DRAWINGS

The invention will now be described in more detail and with reference to the appended drawings in which:
Fig. 1 is a schematic exploded perspective view of an embodiment of a V-type filter of the invention.

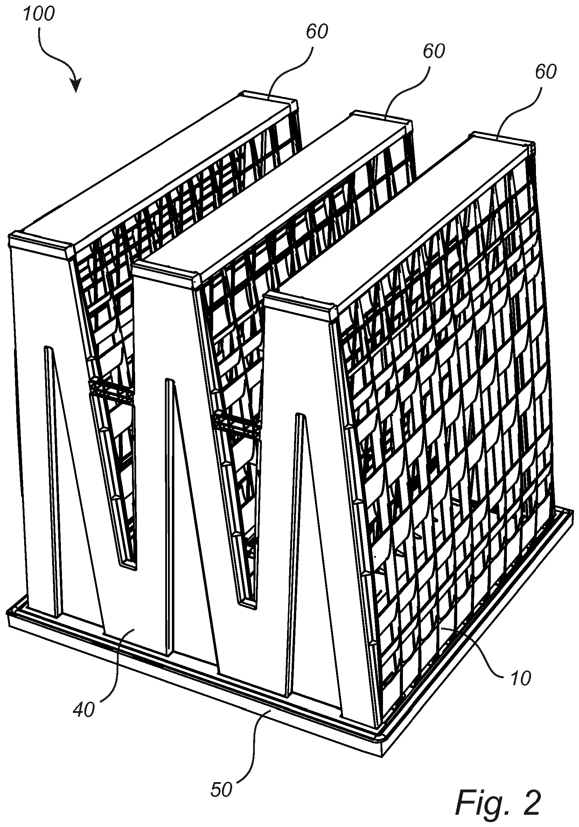

Fig. 2 is a schematic perspective view of an embodiment of a V-type filter of the invention.
Fig. 3 is a perspective view of an embodiment of the backing net according to the invention.
Fig. 4 is a schematic side view of an embodiment of the backing net according to the invention.
Fig. 5 is a schematic explanatory view of the invention.
Fig. 6 is a schematic perspective view of an embodiment of the invention.
Fig. 7 is a schematic cross-sectional view of a detail of a V-type filter according to the invention.

### DESCRIPTION OF PREFERRED EMBODIMENTS

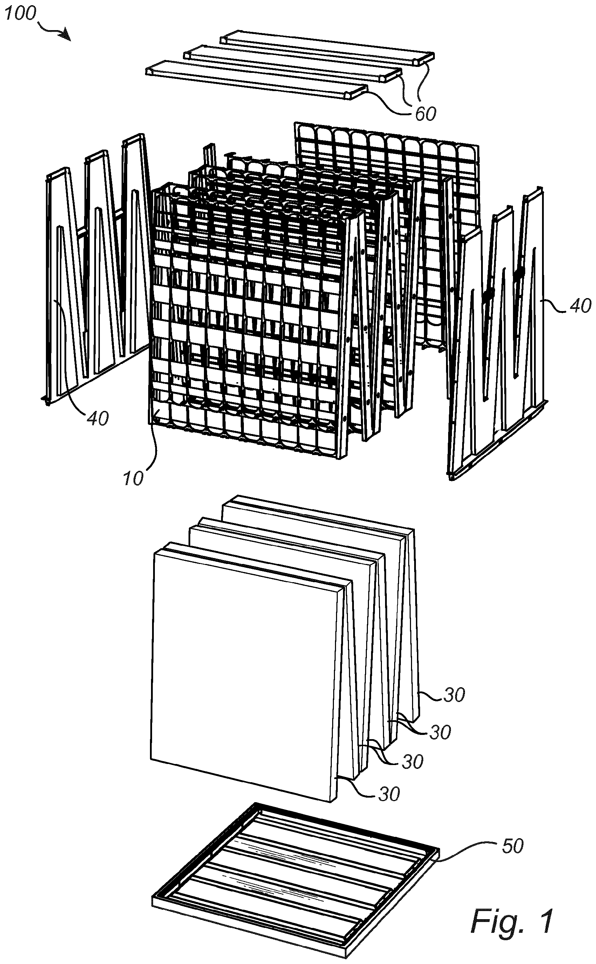

The present invention relates to a backing net in filter assemblies for removing particles from an air flow, and more particularly to a backing net structure for a pleated filter media in a V-type arrangement as shown in figure 1. Shown therein is an exploded view of an embodiment of a filter assembly 100 of the present invention. The filter assembly 100 includes a frame structure having six media packs 30 arranged therein. The media packs 30 comprises a rectangular pleated media, having opposing first and second side edges, and opposing front and rear edges. The media pack is fabricated from a sheet of filter media, made of e.g. a fiberglass sheet, or a nonwoven polyester sheet, which is pleated to increase the effective filtering area of the filter body. The filter assembly 100 is here a frame structure comprising a plurality of frame elements: side panels 40, a top panel 50, and three bottom panels 60. The media packs 30 are stacked in a repeated V-structure within the frame structure, having their opposite side edges arranged facing a respective side panel 40, while at least one of the front and rear ends of each stacked media pack 30 bares against a corresponding front or rear end of an adjacent media pack 30 to form the V-structure. The opposite front and rear ends of the media pack 30 are arranged facing the top panel 50 and one of the bottom panels 60, respectively. Further, when the filter assembly 100 is mounted, the side edges and the front and rear ends of the media pack 30 are sealed against the frame elements 40, 50, 60 of the frame structure, such that substantially all of the air passing through the filter assembly will pass through the media pack 30. Typically the air enters the filter assembly 100 via the top panel 50 in a direction perpendicular thereto and exits the filter assembly 100 at the bottom panels 60 in the same direction such that the general air flow direction is a direction perpendicular to a principal plane of the top panel 50.

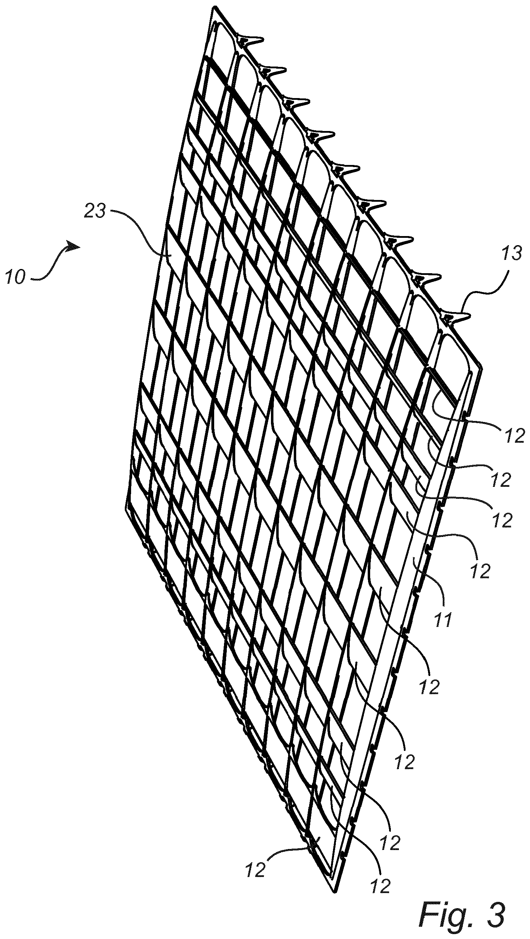

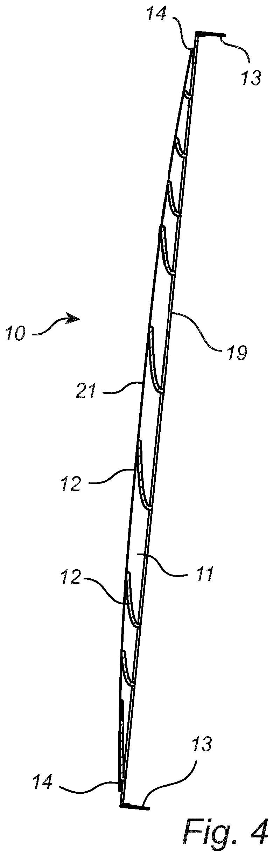

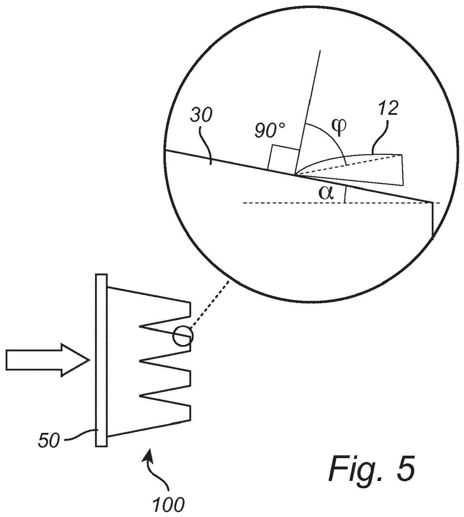

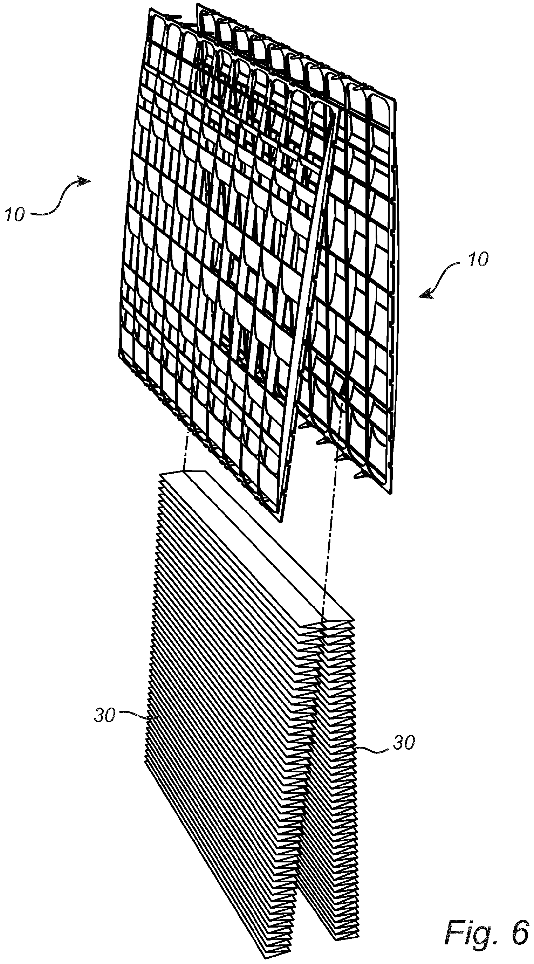

In a first embodiment of a backing net according to the invention, as shown best in figures 3, 4 and 6, a backing net 10 comprises a number of longitudinal beams 11 and vanes 12. In contrast to the backing nets of the prior art, the longitudinal beams 11 according to the present invention have a height that varies over their length and vanes 12 are provided that guide the air having passed through the filter media in a preferred direction while providing additional strength to the net. Furthermore, the outermost longitudinal beams each have a lateral rib protruding outwardly. This lateral rib is provided with dovetail slots in order to increase an adhesive bond between the backing net 10 and the filter frame structure. Thereby a backing net 10 is obtained that possesses a high degree of rigidity, especially against deflection. A backing net of this type may have to endure pressures of about 6000-6500 Pa, which for a net being 550*600mm will be equivalent with a load of up to 210 kg. Therefore, in order to avoid that adjacent filter media packs 30 deflect and come too close to each other such that air flow is impeded or even come to break, the backing net 10 need to be as rigid as possible. But at the same time, the combined thickness of media pack 30 and backing net 10 at the front and rear edges, i.e. where adjacent media pack 30 and backing nets 10 come into contact with each other and the top and bottom panels 50, 60 respectively, should be kept as low as possible. This since the area of the bottom panels 60 and the corresponding parts of top panel 50 can be regarded as dead, or restricting, areas when it comes to air flow characteristics. In order to reduce pressure drop over the filter assembly these areas are to be minimized. Therefore, the reduced height at the ends of the longitudinal beams 10 of the present invention is very favorable in this respect. Further details as to the beams can be found in PCT/EP2012/068707 from which priority is sought for this application. The vanes 12 of the present invention are arranged in the gaps between adjacent longitudinal beams and do not add to the overall height of the backing net in addition to the longitudinal beams. This is best shown in figure 4 where it is indicated how the vanes 12 are arranged in the gap between two adjacent longitudinal beams 11 while not adding anything to the overall height of the backing net 10. Figure 4 also shows the curvature of the vanes 12, the importance of which will now be discussed. An air flow entering a filter frame assembly comprising a pleated filter media, in this case a V-type filter frame assembly, enters and exits the filter assembly in a direction generally perpendicular to the principal plane of top panel 50. The air flow will, however, pass through the filter media itself at a direction more or less perpendicular to the main surface of the filter media pack, thus having to change direction when doing so. As the air then exits the filter media pack, it again changes its flow direction, this time back to the overall flow direction. A curved vane can be therefore made with an up-stream starting point, i.e. closest to the filter media pack, having a relatively steep angle, i.e. perpendicular to the filter media pack and thus more or less the same as the air leaving the filter media, or at least close thereto. Immediately thereafter, the curvature of the vane can turn the air flow towards the preferred flow direction. Such curvature secures that the air flow can be re-directed without unnecessary pressure drop. Such vane 12 can be seen in figure 4 where it starts at an up-stream position, near a lower edge 19 of the backing net 10 intended to bear against a down-stream surface of a filter media pack 30. It starts in a direction substantially perpendicular to a main surface of the backing net 30, and thus to a main surface of media pack 30, and thereafter smoothly turns towards a direction substantially parallel to the general air flow direction when it reaches the upper edge 21 of the backing net 10. In a preferred embodiment, a tangent of a down-stream end of vane 12 lies in the plane of the general air flow direction. The smooth transition in vane direction secures a change of air flow direction with no, or at least very small, additional pressure drop. Figure 5 shows in an explanatory and simplified manner the shape of the curved vane 12. Here it is shown angle α, which is half the opening angle between two adjacent V-structures; and ϕ which is the angle between the normal of the principal plane of the backing net, and thus to the principal plane of the media pack 30, and a straight, imaginary line connecting the starting point and the end point of the vane 12. In order for air to be able to leave the filter assembly without an undue pressure drop, ϕ should fulfill 0°<ϕ< 90°, where ϕ being positive in the downstream direction. A preferred curvature of the vane 12 can be described by stating that the vane 12 has a curved shape such that the angle between the normal to a principal plane of the backing net 10 and a line between the vane starting point and any point on the vane is smaller or equal to the angle between the normal of the principal plane of the backing net 10 and a straight, imaginary line connecting the starting point and the end point of the vane.

The side view of the longitudinal beam 11 is also shown in figure 4. Here it can be seen that the longitudinal beam 11 has an arc shaped upper side which gives the longitudinal beam 11 the favorable characteristics, i.e. high flexural rigidity while still contributing to a low total thickness at the front and rear edges of the media pack 30 . The arc-shaped upper side of the longitudinal beam 10 ends abruptly near the front and rear edges of backing net 10, thus creating an abutting surface 14. This abutting surface 14 provides for additional structural rigidity of the backing net 10 when inserted into top and bottom panels 50, 60 respectively. Top and bottom panels 50, 60 typically comprises a recess or similar into which the media pack 30 together with backing net 10 is inserted. This recess is subsequently filled with an adhesive in order to create a strong and air tight bond between the separate elements. The abutting surface 14 will then abut a corresponding surface of the top or bottom panel 50, 60 thus enhancning the rigidity of the system. Of course the adhesive can be provided into the recess prior to insertion of the media pack 30 with backing net 10 as well. Of course, other shapes of longitudinal beams 11 are also conceivable, for example a step-by-step increase in height or a linear increase in height.

Along front and rear edges of the backing net 10, downwardly protruding tabs 13 are provided. These have substantially two functions. Firstly, they allow for the backing net 10 to be temporarily attached to a corresponding media pack 30 . The tabs 13 will clasp around the edges of the media pack 30 such that the media pack 30 and the backing net 10 jointly can be attached to the filter frame assembly in a subsequent step. Secondly, the tabs 13 allow for backing nets 10 to be stacked and held in place one on top of the other which is advantageous during transportation and stock keeping.

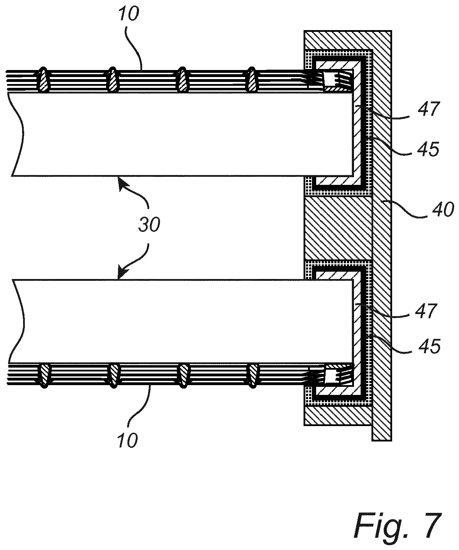

Figure 7 shows a cross section of a filter assembly as illustrated in figure 1 in which two media pack 30 are arranged in a frame element, here side panel 40. The filter medias are before being emerged in a pot 45 in a first molding step, provided with a backing net 10. The backing net 10 and the media pack 30 are temporarily held together by means of tabs 13, not shown herein. The backing net 10 and media pack 30 are emerged together into the first molding compound layer 47, and subsequently fixated and sealed within the pot 45. The ribs extending along the lateral edges of the backing net 10 are thereby sealed in the pot 45 together with the media pack 30 in this first molding step.

The provision of the pot 45 further increases the structural rigidity of the media pack 30 and backing net 10 which facilitates the insertion thereof the thus created media packs into the filter frame assembly, i.e. side panel 40, top panel 50 and bottom panel 60. In a second molding step, the media pack 30 , backing net 10 and pot 45 are jointly inserted and attached to the filter frame assembly comprising the top panel 50 and side panels 40. When the media pack 30 , backing net 10 and pot 45 have been inserted, bottom panels 60 are attached to the side panels 40. Preferably the molding compound used in the first 47 and/or second 46 molding step is selected from suitable single or multi-component materials which can be dispensed as a liquid and subsequently be hardened, i.e. cured, such as a material chosen from a group consisting of polyvinylchloride plastisols, polyurethanes, epoxies, silicones and ceramics. Further details concerning the arrangement of pot 45 can be found in PCT/EP2012/067746 from which priority is sought for this application.

Finally, it is realized that the backing net using longitudinal beams having a varying height over the length thereof and vanes for directing the air flow uses the advantages of having both a thin backing net at the edges thereof for reducing pressure losses over the filter due to dead areas and a more rigid backing net towards a central portion thereof for reducing deflection of the filter media during use. This allows for the use of filter media packs having a greater in-depth length than in prior art solutions. Instead of using filters of e.g. 300mm or 450mm length, it is now possible to use filters having a in-depth length of 600mm. This greatly reduces pressure drop over the filter at a given flow rate. By using a backing net according to the present invention it may even be possible to replace two filter frame assemblies coupled in series with one single assembly, which implies lower maintenance times and thus reduced costs. The net and the other filter frame details may be manufactured from a number of materials such as plastic or metal. Preferably, all parts of the filter frame assembly may be made from ABS, except for the backing net which could be made from reinforced (glass fibers) ABS. Other materials are also conceivable, such as polystyrene, polypropylene etc. Furthermore, it is obvious that the vanes does not necessarily have to be curved. They may just as well be flat and still attain the advantages mentioned herein, i.e. air flow direction and improved net rigidity. It is not necessary that all longitudinal beams have a varying height along its length. For example, the two outermost longitudinal beams may comprise a substantially flat rib extending along a lateral edge of the filter media. The outermost beams are typically not subject to the same forces as the beams towards the central portion of the backing net and do therefore not have to be as rigid as beams. Since the backing net is attached to the filter frame structure along the lateral edges, the forces are to a high degree carried by the filter frame. The flat rib may also be provided with dovetail slots similar to what is stated above. Further, the V-type filter of the present invention may in use be located with a principal plane of the side plates lying in any plane, such as a horizontal plane or in a vertical plane such that the bottom of the V-shape can be aligned in any preferred direction.

## Claims

1. Backing net (10) for arrangement on the downstream surface of a filter media pack (30) for a V-type filter, wherein the backing net (10) has a longitudinal direction and a lateral direction, said backing net (10) comprising a plurality of longitudinal beams (11), each having first and second ends and being arranged to be mounted to the filter media pack (30) in the longitudinal direction, and each having a height that varies over their length with a reduced height at the ends of the longitudinal beam, said backing net (10) further comprising a plurality of vanes (12), wherein each vane (12) is attached to adjacent longitudinal beams (11) and is arranged in a gap between the adjacent longitudinal beams (11) to extend in the lateral direction, wherein the vanes (12) are adapted to direct an air flow passing through the backing net (10) in a preferred direction, and wherein an angle ϕ between the normal of the principal plane of the backing net (10) and a straight, imaginary line connecting the starting point and the end point of each vane (12) lies between 0° and 90°.

2. Backing net (10) according to claim 2, wherein the dimensions of the separate vanes (12) differ.

3. Backing net (10) according to claim 1, wherein the vane (12) has a flat shape.

4. Backing net (10) according to claim 1, wherein the vane (12) has a curved shape.

5. Backing net (10) according to claim 1, wherein no point of the vane (12) has a greater height than the height of the longitudinal beam (11) at the same in depth position.

6. Backing net (10) according to claim 1, wherein the vane (12) has a curved shape such that the angle between the normal to a principal plane of the backing net (10) and a line between the vane starting point and any point on the vane (12) is smaller or equal to the angle between the normal of the principal plane of the backing net (10) and a straight, imaginary line connecting the starting point and the end point of the vane (12).

7. Backing net (10) according to claim 1, wherein at least a partial surface of the vane (12) has a surface roughness which delays flow separation of an air flow passing through the backing net.

8. Filter media pack for a V-type filter, wherein the filter media pack has an up-stream surface and a down-stream surface and wherein a backing net (10) according to any of claims 1-7 is provided on the down-stream surface of the filter media pack.

9. V-type filter comprising a plurality of filter media packs according to claim 8 arranged in a V-type manner, wherein the V-type filter comprises a frame structure (100) and wherein the filter media pack is attached to said frame structure (100).

10. V-type filter according to claim 9, wherein an angle ϕ between the normal of the principal plane of the backing net (10) and a straight, imaginary line connecting the starting point and the end point of the vane (12) is α<ϕ<90°, where α is half the opening angle of the V-shape and α<90°.

11. V-type filter according to claim 9, wherein an angle ϕ between the normal of the principal plane of the backing net (10) and a straight, imaginary line connecting the starting point and the end point of the vane (12) is 2*α<ϕ<90°, where α is half the opening angle of the V-shape and α<45°.

12. V-type filter according to claim 9, wherein an angle ϕ between the normal of the principal plane of the backing net (10) and a straight, imaginary line connecting the starting point and the end point of the vane (12) is 3*α<ϕ<90°, where α is half the opening angle of the V-shape and α<30°.

13. V-type filter according to claim 9, wherein an angle ϕ between the normal of the principal plane of the backing net (10) and a straight, imaginary line connecting the starting point and the end point of the vane (12) is α<ϕ<90°- α, where α is half the opening angle of the V-shape and where α<45°.

14. V-type filter according to claim 9, wherein the dimensions and shapes of the backing net (10) are chosen such that the backing net (10) does not form a restriction of the air flow through the filter in addition to the filter media.

## Patentansprüche

1. Stütznetz (10) zur Anordnung auf der stromabwärtigen Oberfläche eines Filtermedienpakets (30) für einen V-Typ-Filter, wobei das Stütznetz (10) eine Längsrichtung und eine Querrichtung aufweist, wobei das Stütznetz (10) eine Vielzahl von Längsträgern (11) umfasst, die jeweils ein erstes und ein zweites Ende aufweisen und so angeordnet sind, um an dem Filtermedienpaket (30) in der Längsrichtung montiert zu werden, und jeweils eine Höhe aufweisen, die über ihre Länge mit einer reduzierten Höhe an den Enden des Längsträgers variiert, wobei das Stütznetz (10) ferner eine Vielzahl von Schaufeln (12) umfasst, wobei jede Schaufel (12) an angrenzenden Längsträgern (11) befestigt ist und in einem Spalt zwischen den angrenzenden Längsträgern (11) so angeordnet ist, um sich in der Querrichtung zu erstrecken, wobei die Schaufeln (12) so ausgebildet sind, um einen Luftstrom, der durch das Stütznetz (10) strömt, in eine bevorzugte Richtung zu lenken, und wobei ein Winkel ϕ zwischen der Normalen der Hauptebene des Stütznetzes (10) und einer geraden, imaginären Linie, die den Anfangspunkt und den Endpunkt jeder Schaufel (12) verbindet, zwischen 0° und 90° liegt.

2. Stütznetz (10) nach Anspruch 2, wobei sich die Abmessungen der separaten Schaufeln (12) unterscheiden.

3. Stütznetz (10) nach Anspruch 1, wobei die Schaufel (12) eine flache Form aufweist.

4. Stütznetz (10) nach Anspruch 1, wobei die Schaufel (12) eine gekrümmte Form aufweist.

5. Stütznetz (10) nach Anspruch 1, wobei keine Stelle der Schaufel (12) eine größere Höhe aufweist als die Höhe des Längsträgers (11) an derselben Tiefenposition.

6. Stütznetz (10) nach Anspruch 1, wobei die Schaufel (12) eine gekrümmte Form aufweist, so dass der Winkel zwischen der Normalen auf eine Hauptebene des Stütznetzes (10) und einer Linie zwischen dem Schaufelanfangspunkt und einem beliebigen Punkt auf der Schaufel (12) kleiner oder gleich dem Winkel zwischen der Normalen der Hauptebene des Stütznetzes (10) und einer geraden, imaginären Linie ist, die den Anfangspunkt und den Endpunkt der Schaufel (12) verbindet.

7. Stütznetz (10) nach Anspruch 1, wobei mindestens eine Teiloberfläche der Schaufel (12) eine Oberflächenrauheit aufweist, die eine Strömungsablösung eines durch das Stütznetz strömenden Luftstroms verzögert.

8. Filtermedienpaket für einen V-Typ-Filter, wobei das Filtermedienpaket eine stromaufwärtige Oberfläche und eine stromabwärtige Oberfläche aufweist und wobei ein Stütznetz (10) nach einem der Ansprüche 1-7 auf der stromabwärtigen Oberfläche des Filtermedienpakets bereitgestellt ist.

9. V-Typ-Filter, umfassend eine Vielzahl von Filtermedienpaketen nach Anspruch 8, die in einer V-Typ-Weise angeordnet sind, wobei der V-Typ-Filter eine Rahmenstruktur (100) umfasst und wobei das Filtermedienpaket an der Rahmenstruktur (100) befestigt ist.

10. V-Typ-Filter nach Anspruch 9, wobei ein Winkel ϕ zwischen der Normalen der Hauptebene des Stütznetzes (10) und einer geraden, imaginären Linie, die den Anfangspunkt und den Endpunkt der Schaufel (12) verbindet, α<ϕ<90° beträgt, wobei α die Hälfte des Öffnungswinkels der V-Form und a<90° ist.

11. V-Typ-Filter nach Anspruch 9, wobei ein Winkel ϕ zwischen der Normalen der Hauptebene des Stütznetzes (10) und einer geraden, imaginären Linie, die den Anfangspunkt und den Endpunkt der Schaufel (12) verbindet, 2*α<ϕ<90° beträgt, wobei α die Hälfte des Öffnungswinkels der V-Form und a<45° ist.

12. V-Typ-Filter nach Anspruch 9, wobei ein Winkel ϕ zwischen der Normalen der Hauptebene des Stütznetzes (10) und einer geraden, imaginären Linie, die den Anfangspunkt und den Endpunkt der Schaufel (12) verbindet, 3*α<ϕ<90° beträgt, wobei α die Hälfte des Öffnungswinkels der V-Form und a<30° ist.

13. V-Typ-Filter nach Anspruch 9, wobei ein Winkel ϕ zwischen der Normalen der Hauptebene des Stütznetzes (10) und einer geraden, imaginären Linie, die den Anfangspunkt und den Endpunkt der Schaufel (12) verbindet, α<ϕ<90°- α beträgt, wobei α die Hälfte des Öffnungswinkels der V-Form und wobei a<45° ist.

14. V-Typ-Filter nach Anspruch 9, wobei die Abmessungen und Formen des Stütznetzes (10) so gewählt sind, dass das Stütznetz (10) keine Einschränkung des Luftstroms durch den Filter zusätzlich zu dem Filtermedium bildet.

## Revendications

1. Filet de support (10) à disposer sur la surface en aval d'un bloc de média filtrant (30) pour un filtre de type en V, dans lequel le filet de support (10) a une direction longitudinale et une direction latérale, ledit filet de support (10) comprenant une pluralité de membrures longitudinales (11), chacune ayant des première et seconde extrémités et étant agencée pour être montée sur le bloc de média filtrant (30) dans la direction longitudinale, et chacune ayant une hauteur qui varie sur sa longueur avec une hauteur réduite aux extrémités de la membrure longitudinale, ledit filet de support (10) comprenant en outre une pluralité d'aubes (12), dans lequel chaque aube (12) est fixée à des membrures longitudinales adjacentes (11) et disposée dans un espace entre les membrures longitudinales adjacentes (11) pour s'étendre dans la direction latérale, dans lequel les aubes (12) sont adaptées pour diriger un flux d'air traversant le filet de support (10) dans une direction préférée, et dans lequel un angle ϕ entre la normale du plan principal du filet de support (10) et une ligne droite imaginaire reliant le point de commencement et le point de terminaison de chaque aube (12) se situe entre 0° et 90°.

2. Filet de support (10) selon la revendication 2, dans lequel les dimensions des aubes (12) séparées diffèrent.

3. Filet de support (10) selon la revendication 1, dans lequel l'aube (12) a une forme plate.

4. Filet de support (10) selon la revendication 1, dans lequel l'aube (12) a une forme incurvée.

5. Filet de support (10) selon la revendication 1, dans lequel aucun point de l'aube (12) n'a une hauteur supérieure à la hauteur de la membrure longitudinale (11) à la même position en profondeur.

6. Filet de support (10) selon la revendication 1, dans lequel l'aube (12) a une forme incurvée telle que l'angle entre la normale à un plan principal du filet de support (10) et une ligne entre le point de commencement de l'aube et un point quelconque sur l'aube (12) est inférieur ou égal à l'angle entre la normale du plan principal du filet de support (10) et une ligne droite imaginaire reliant le point de commencement et le point de terminaison de l'aube (12).

7. Filet de support (10) selon la revendication 1, dans lequel au moins une surface partielle de l'aube (12) présente une rugosité de surface qui retarde la séparation d'un flux d'air traversant le filet de support.

8. Bloc de média filtrant pour un filtre de type en V, dans lequel le bloc de média filtrant a une surface amont et une surface aval et dans lequel un filet de support (10) selon l'une quelconque des revendications 1 à 7 est prévu sur la surface aval du bloc de média filtrant.

9. Filtre de type en V comprenant une pluralité de blocs de média filtrant selon la revendication 8 disposés de manière à former un V, dans lequel le filtre de type en V comprend une structure de cadre (100) et dans lequel le bloc de média filtrant est fixé à ladite structure de cadre (100).

10. Filtre de type en V selon la revendication 9, dans lequel un angle ϕ entre la normale du plan principal du filet de support (10) et une ligne droite imaginaire reliant le point de commencement et le point de terminaison de l'aube (12) est tel que α<ϕ<90°, où α est la moitié de l'angle d'ouverture de la forme en V et a<90°.

11. Filtre de type en V selon la revendication 9, dans lequel un angle ϕ entre la normale du plan principal du filet de support (10) et une ligne droite imaginaire reliant le point de commencement et le point de terminaison de l'aube (12) est tel que 2*α<ϕ<90°, où α est la moitié de l'angle d'ouverture de la forme en V et α<45°.

12. Filtre de type en V selon la revendication 9, dans lequel un angle ϕ entre la normale du plan principal du filet de support (10) et une ligne droite imaginaire reliant le point de commencement et le point de terminaison de l'aube (12) est tel que 3*α<ϕ<90°, où α est la moitié de l'angle d'ouverture de la forme en V et α<30°.

13. Filtre de type en V selon la revendication 9, dans lequel un angle ϕ entre la normale du plan principal du filet de support (10) et une ligne droite imaginaire reliant le point de commencement et le point de terminaison de l'aube (12) est tel que α<ϕ<90°- α, où α est la moitié de l'angle d'ouverture de la forme en V et où α<45°.

14. Filtre de type en V selon la revendication 9, dans lequel les dimensions et les formes du filet de support (10) sont choisies de telle sorte que le filet de support (10) ne forme pas une restriction du flux d'air à travers le filtre en plus du média filtrant.
